# EUROPEAN PATENT APPLICATION

(11) **EP 3 207 799 A1**
(43) Date of publication of application: **23.08.2017**
(21) Application number: 16155846.5
(22) Date of filing: 16.02.2016
(51) Int. Cl.: A01N 25/00

(54) **IMPROVED CONTROL OF INSECTS LAYING THEIR EGGS IN STAGNANT WATERS**

(71) Applicant: Ceulemans, Philippe, 2300 Turnhout (BE); Ceulemans, Olivier, 2275 Gierle (BE)
(72) Inventor: Ceulemans, Philippe, 2300 Turnhout (BE); Ceulemans, Olivier, 2275 Gierle (BE)
(74) Representative: Gevers Patents

(57) **Abstract**

Disclosed is the use of a viscosity booster for the control or local eradication of insects which lay their eggs in water, in particular for the control of populations of insects which lay their eggs in stagnant waters. The present invention is targeted at reducing the spread of insect-borne diseases, in particular mosquito-borne diseases, which may be transmitted by insects infected by pathogens such as viruses, parasites or bacteria. Notorious examples of such diseases and pathogens are yellow fever, dengue fever, filariasis, malaria, the west-Nile virus and the Zika virus.

## Description

### FIELD OF THE INVENTION

The present invention relates to the control of insects which, as part of their life cycle, are laying their eggs in stagnant waters. More particularly, the invention is directed to the control of such insects which act as vectors for disease-causing organisms by carrying these organisms from one living host to another, being animal or human.

### BACKGROUND OF THE INVENTION

Mosquitoes are the most notorious and well-known kind of insects in the target group for being controlled in accordance with the present invention. Mosquitoes go through four stages in their lifecycles: egg, larva, pupa, and adult or imago. In most species, adult females lay their eggs in open and stagnant water; some lay eggs near the water's edge; others attach their eggs to aquatic plants. Each mosquito species selects the situation of the water into which it lays its eggs and does so according to its own ecological adaptations. Some are generalists and are not very fussy.

Mosquitoes, and in particular the biting kinds of which the "gnats" are the best known, can act as vectors for many disease-causing viruses and parasites threatening the health of humans and animals. The infected mosquitoes carry the organisms from one host to another host, usually without exhibiting symptoms themselves.

Females of most mosquito species are ectoparasites, whose tube-like mouthparts pierce the hosts' skin to consume blood. Their interest in blood consumption is particularly high as a source of proteins and other nutrients for the production of eggs. The most notorious disease vector mosquito species actually need a blood meal for their first cycle of egg production. Thousands of mosquito species feed on the blood of various kinds of hosts, mainly vertebrates, including mammals, birds, reptiles, amphibians, and even some kind of fish. Some mosquitoes also attack invertebrates, mainly arthropods. While the loss of blood is seldom of any importance to the victim, the stream of saliva of the mosquito which is injected prior to and/or during blood feeding and which is serving as an anticoagulant, often causes an irritating rash that is a serious nuisance. Much more serious though, is the possible transmission of pathogens to the host, with the saliva being injected by an infected mosquito. The insect may have picked up the pathogen at the occasion of an earlier blood meal.

Bloodsucking mosquitoes, depending on species, sex, and weather conditions, have potential adult lifespans ranging from as short as a week to as long as several months.

Mosquito-borne diseases include extremely harmful infections such as malaria, yellow fever, the west Nile virus, dengue fever, chikungunuya, filariasis, the Zika virus and yet other arboviruses, rendering the mosquito the deadliest animal family in the world. Also poultry and cattle populations are frequent victims of mosquito-borne diseases, such as avian malaria amongst poultry, the Eastern equine encephalitis virus in North America amongst birds, reptiles, amphibians and various mammals, including humans and horses, and bluetongue amongst ruminants, mainly sheep. One estimates that over 700 million people annually are affected by, and at least two million people annually die of the various types of diseases transmitted by the various species of mosquitoes.

Methods to prevent the spread of disease, or to protect individuals in areas where disease is endemic, include vector control, aimed at mosquito control or eradication, disease prevention, using prophylactic drugs and developing vaccines, and prevention of mosquito bites, with insecticides, nets and repellents.

Many measures have been tried for mosquito control, including the elimination of breeding places, exclusion via window screens and mosquito nets, and biological control with parasites or predators. Even the introduction of large numbers of sterile males, and genetic methods have been explored.

High volumes of insect repellents and insecticides however continue to be used worldwide. The purpose of these measures is to either reduce the chances on blood feeding by the female mosquitoes, or the control of the mosquito population as a whole. Their drawback is that they introduce synthetic chemicals into the habitat of animals and humans, as well as in the environment.

It is the object of the present invention to offer an environmentally and toxicologically more benign method for the local control of the mosquito population.

The present invention aims to obviate or at least mitigate the above described problem and/or to provide improvements generally.

### SUMMARY OF THE INVENTION

According to the invention, there is provided a use as defined in any of the accompanying claims.

The present invention provides for the use of a viscosity booster for the control or local eradication of insects which lay their eggs in stagnant waters, in particular for the control of populations of insects which lay their eggs in stagnant waters.

We have found that a viscosity booster, when present in waters in which insect eggs are laid and develop into further lifecycle stages, is able to significantly disturb the lifecycle of the insect, and hence is able to control the population of the insects in the area of the waters, and even capable of eradicate locally the target insect population. We have found that the present invention may represent an interesting method for the vector control of diseases transferred by insects laying their eggs in stagnant waters.

We have found that the viscosity booster according to the present invention is able to impede or impair the mobility of the larvae and/or pupae in the water phase. The larvae need to breathe, and therefore need to come to the surface frequently. The larvae also need to feed, on algae, bacteria and other microbes, almost constantly. The larvae therefore also need to move in order to reach their food. The larvae develop through various stages, and at the end of each stage need to shed their skins to allow for further growth. Also this skin shedding requires movement. The pupa is a form which can swim actively by flipping its abdomen. The pupa also has to breathe, and therefore most come to the water surface frequently. If alarmed, the pupae want to swim downwards. If undisturbed, they soon float up again.

The insect larvae and pupae therefore require a significant degree of mobility in order to pass through these lifecycle forms. The inventors have found that the impediment of the mobility of the insect larvae and/or pupae significantly disturbs the overall insect lifecycle. If the viscosity of the water is higher, the larvae and pupae will at least have to spend more energy in order to come to the surface to breath, and to move to reach more nutrients, and may even be prohibited in reaching the new nutrients needed for their survival and for their further development towards the imago stage. Readily the energy which is spent in finding more nutrient surpasses the amount of energy that may be reached from new nutrients and hence be collected by the larva. From that level on, the larva will be unable to survive, let alone develop further towards the next lifecycle stage. With pupae, the viscosity booster increases the energy needed to come to breathe at the surface, and hence reduces the energy it is able to put into its further development towards the imago stage. The viscosity booster is for these reasons able to control the insect population and to suppress all the effects that these insects may have on their surroundings, in particular to their surrounding fauna, especially the mosquito-borne diseases.

The applicants therefore submit that the present invention may have a significant effect on the spread of insect-borne diseases, in particular the mosquito-borne diseases which have been mentioned elsewhere in this document. The applicants therefore submit that the present invention may bring a significant contribution to public health and to the economic activity where this is animal-based.

The applicants further submit that the present invention is able to make this contribution in an environmentally and toxicologically more benign way, e.g. without raising the toxicity and ecotoxic concerns which are often associated with the use of insect repellents and/or insecticides.

The applicants further submit that the present invention offers a method for insect control and/or disease spread prevention which is much simpler, less risky, more convenient and easier to put into practice as compared to some of the alternative methods of disease vector controls, such as mosquito nets, window screens, biological control with parasites or predators, and even genetic methods.

The applicants further submit that the present invention also reduces the degree of nuisance which the target insects, in particular mosquitoes, may represent for animal or human life in the area of application of the invention. By also bringing an extra control to the insect population outdoors, the comfort of animals and humans, in particular the quality of their outdoor life, may be significantly improved.

### DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of" and "consisting of."

Unless specified otherwise, all values provided herein include up to and including the endpoints given, and the values of the constituents or components of the compositions are expressed in weight percent or % by weight of each ingredient in the composition.

Additionally, each compound used herein may be discussed interchangeably with respect to its chemical formula, chemical name, abbreviation, etc.

Like all flies, mosquitoes go through four stages in their lifecycles: egg, larva, pupa, and adult or imago. The first three stages-egg, larva, and pupa-are largely aquatic. These stages typically last five to 14 days, depending on the species and the ambient temperature. Eggs hatch to become larvae, which grow until they are able to change into pupae. The adult mosquito emerges from the mature pupa as it floats at the water surface. Bloodsucking mosquitoes, depending on species, sex, and weather conditions, have potential adult lifespans ranging from as short as a week to as long as several months.

Mosquito larvae breathe through spiracles located on their eighth abdominal segments, or through a siphon, so they must come to the water surface frequently. The larvae spend most of their time feeding on algae, bacteria, and other microbes in the surface microlayer. They dive below the surface only when disturbed. Larvae swim either through propulsion with their mouth brushes, or by jerky movements of their entire bodies, giving them the common name of "wigglers" or "wrigglers". Larvae develop through four stages, or instars, after which they metamorphose into pupae. At the end of each instar, the larvae molt, shedding their skins to allow for further growth. The pupa can swim actively by flipping its abdomen, and it is commonly called a "tumbler" because of its swimming action. As with the larva, the pupa of most species must come to the surface frequently to breathe, which they do through a pair of respiratory trumpets on their cephalothoraces. However, pupae do not feed during this stage; typically they pass their time hanging from the surface of the water by their respiratory trumpets. If alarmed, say by a passing shadow, they nimbly swim downwards by flipping their abdomens in much the same way as the larvae do. If undisturbed, they soon float up again. After a few days or longer, depending on the temperature and other circumstances, the pupa rises to the water surface, the dorsal surface of its cephalothorax splits, and the adult mosquito emerges. The pupa is less active than the larva because it does not feed, whereas the larva feeds constantly.

Adult mosquitoes usually mate within a few days after emerging from the pupal stage. Males typically live for about 5-7 days. After obtaining a full blood meal, the female will rest for a few days while the blood is digested and eggs are developed. Once the eggs are fully developed, the female lays them and resumes host-seeking. The cycle repeats itself until the female dies. Their lifespans depend on temperature, humidity and their ability to successfully obtain a blood meal while avoiding host defences and predators.

The female insects lay their eggs in the water, often while just flying over the water, bobbing up and down to the water surface and dropping eggs more or less singly. Females of many common mosquito species can lay 100-200 eggs during the course of the adult phase of their lifecycles. Even with high egg and intergenerational mortality, over a period of several weeks, a single successful breeding pair can create a population of thousands.

In an embodiment of the present invention, the use is for increasing the viscosity of open stagnant liquid water parties that exist or may form as a result of irrigation and/or of atmospheric precipitation, preferably sufficiently to impede the mobility of insect larvae and/or insect pupae in stagnant water.

The applicants have observed that many areas surrounding the life of humans and animals of economic value, such as cities, suburbs and residential areas in the country side, offer plenty of places and locations where stagnant water may be found. This may for instance occur in gardens, on terraces, such as underneath terrace coverings, in public places, in catch pits of sewer systems, in flower pots or in the plate put underneath the pot, in street furniture, etcetera. Notorious places are used tires, discarded glass or plastic bottles or food containers, and other kinds of trash where even small amounts of water may become trapped. Each one of these places offer a habitat for the larvae and pupae of insects laying their eggs in water. The applicants have found that the present invention is applicable to such existing water volumes. In addition, the applicants have found that the present invention may also apply to such places and locations even when dry at the moment of application of the invention, because the viscosity booster readily remains in place at the location of application. When later on, for whatever reason, water collects at the location of application, the inventors have found that the use of the viscosity booster in accordance to the present invention is able to increase the viscosity of the water collected later at that same location, and still impede the mobility of the insect larvae and/or insect pupae which may develop from eggs laid in that water by a female insect.

In a preferred embodiment, the use in accordance with the present invention increases the viscosity of the open stagnant liquid water party sufficiently to significantly impede the mobility of the insect larvae and/or insect pupae in the stagnant water. We have found that the dynamic viscosity of the water at low shear stress is preferably increased to the level of at least 2.0 mPa.s at 20°C, more preferably at least 5.0 mPa.s, even more preferably at least 10 mPa.s, yet more preferably at least 50 mPa.s, preferably at least 100 mPa.s, more preferably at least 150 mPa.s, even more preferably at least 300 mPa.s, preferably at least 500 mPa.s, more preferably at least 1000 mPa.s, even more preferably at least 1000 mPa.s, yet more preferably at least 2000 mPa.s, preferably at least 3000 mPa.s, more preferably at least 5000 mPa.s, even more preferably at least 7500 mPa.s, preferably at least 10000 mPa.s, more preferably at least 20000 mPa.s, even more preferably at least 30000 mPa.s. The applicants have found that already a minor increase of the viscosity, such as from 1 to 2.0 mPa.s, has a significant effect, and is able to make survival more difficult, in particular for insect larvae. Bringing the viscosity to yet a higher level, such as at least 50 mPa.s but preferably higher, has a stronger possible effect because of the effect such a viscosity level has on the insect pupae.

In an embodiment, the use of the present invention is for the control of insects in residential areas and/or in animal breeding or animal keeping areas. The inventors have found that in these specified areas for the same effort the advantageous effects can be higher as compared to other areas where the population of hosts is lower. Because of the higher host density, the risk for, and the rate at which a mosquito-borne disease may spread is higher. The effect of the present invention on the control of the population of insects which act as the vector for the disease may therefore also be higher.

In an embodiment, the use according to the present invention is for the control of members of the family of Culicidae, in particular for the control of mosquitoes, more particularly of the mosquitoes species comprising blood-eating or bloodsucking females. The inventors have found that the advantageous effects of the use according to the present invention are higher if the target insects are as specified.

In an embodiment, the use according to the present invention is for the control of insects which are potential vectors for diseases, in particular for disease-causing viruses, parasites or bacteria. The inventors have found that the advantageous effects of the use according to the present invention may be further increased if the target insects are as specified.

In an embodiment, the use according to the present invention is for the prevention of the spread of diseases, in particular for mosquito-borne diseases. The beneficial effects of the present invention are further optimised if targeting the effect as specified.

In an embodiment, the use according to the present invention is the control of diseases selected from the list consisting of malaria, yellow fever, dengue fever, chikungunya, filariasis, in particular lymphatic filariasis, elephantiasis, and tuleramia, and/or for the control of the spread of disease-causing viruses, in particular of a virus selected from the list consisting of the yellow fever virus, the dengue fever virus, the chikungunya virus, the arbovirus, the West Nile virus, the Eastern equine encephalitis virus, the Japanese encephalitis virus, and the Zika virus. The applicants have found that the present invention may be particularly effective in achieving the effects as specified, and that the impact on humans and fauna in the area where the invention is used may be particularly high.

In an embodiment of the use in accordance with the present invention, the viscosity booster is a thickening agent. The applicants have found that a compound which is a thickening agent for aqueous liquids is the simplest kind of compound that is effective in obtaining the effects which are targeted by the present invention. The family of possible thickening agents is very broad, such that under all circumstances and in every environment, a suitable and readily available suitable compound may be identified for the use in accordance with the present invention.

In the embodiment in accordance with the present invention wherein the viscosity booster is a thickening agent, the viscosity booster is selected from the list consisting of
- thickeners which are known and used as food thickeners, comprising polysaccharides, such as starches, vegetable gums, such as alginin, xanthan gum, locust bean gum, guar gum and Arabic gum, derivatives thereof such as sodium alginate, potassium alginate, calcium alginate and ammonium alginate, pectins, or proteins, such as collagen, egg whites, furcellaran and gelatin, sugars, such as agar and carrageenan,
- cosmetic thickeners comprising compounds such as polyethylene glycol or a polymer of (meth)acrylic acid and/or a copolymer of at least two monomers selected from acrylic acid, methacrylic acid, esters of acrylic acid or methacrylic acid and acrylamide.
- paint and printing thickeners such as polyurethanes, latex, styrene/butadiene, polyvinyl alcohol, a clay such as attapulgite, bentonite and montmorillonite, celluloses such as carboxy methyl cellulose (CMC, also known as cellulose gum), hydroxyethyl cellulose, hydroxyethyl methyl cellulose (HMC), hydroxypropyl cellulose (HPC), hydroxypropyl methyl cellulose (HPMC), sulfonates, modified castor oil and organosilicones.

The use of thickeners which are known and/or approved as food thickeners bring the advantage that they avoid raising a concern of possible toxicity to fauna, flora, mankind, or the environment as a whole. Such viscosity boosters enjoy a higher level of acceptance by the users and do not raise health concerns for the users, their relatives and closed ones.

Thickeners used in cosmetic products also enjoy the advantage that they have been tested for skin contact, and hence avoid the concern of being possible skin irritants or skin sensitizers.

In an embodiment of the use according to the present invention, the viscosity booster provides non-Newtonian fluid behaviour to an aqueous fluid. The applicants have found that a high number of suitable viscosity boosters, even at very low concentrations, actually modify the behaviour of water from a Newtonian fluid behaviour to a non-Newtonian fluid behaviour. The applicants have found that there may be further advantages to be obtained with compounds that provide such non-Newtonian fluid behaviour. The applicants prefer that the viscosity booster raises the viscosity at low shear, but that the viscosity is suppressed under high shear conditions. This brings the advantage that a solution of the viscosity booster may readily be sprayed or atomized for easy application, but that the solution, once applied and at rest, behaves as a gel and remains in the location where it was applied.

In an embodiment of the use according to the present invention, the viscosity booster is selected from the list consisting of fumed silica, precipitated silica, talc, chalk, a cross-linked polymer of (meth)acrylic acid and/or a copolymer of at least two monomers selected from acrylic acid, methacrylic acid, esters of acrylic acid or methacrylic acid and acrylamide.

The polymers amongst this list bring the advantage that they are able to bring their desired effect, in this case the viscosity boosting of water, without any need for extra treatment, such as strong chemical neutralisation or heating, which may be needed with other viscosity boosters such as starch or pectin. The polymers are therefore much easier to use, and do not require some of the more complex preparation steps required with other viscosity boosters. The polymers are capable of forming an aqueous gel, or at least boost the viscosity of water upon simple introduction into the aqueous phase. The polymeric viscosity boosters are therefore much easier to work with, and require less preparation before they may be used in accordance with the present invention.

Another advantage of the polymers in the above list is that they are less prone to degradation and decay, unlike many of the other viscosity boosters listed elsewhere in this document. The applicants have found that the polymers are able to remain effective after several freeze/thaw cycles.

Yet another advantage with the polymers in this list, is that the polymers less likely form a point of attraction as potential nutrient for other animals, at microscopic level (e.g. fungi, bacteria) and/or at macroscopic level (e.g. chipmunks, rats and mice).

The polymers, including their non-cross-linked variants, also enjoy the status of approved for food, pharmaceutical and cosmetic products. The entire family of polymers therefore brings toxicological, ecological and also functional advantages.

In an embodiment of the use according to the present invention, the viscosity booster provides shear-thinning (pseudoplastic) behaviour to an aqueous fluid. Pseudoplastic or shear-thinning fluid behaviour is typical for a particular kind of non-Newtonian fluids, and it means that the viscosity is reduced under high shear conditions, while it rebuilds under low shear conditions. The applicants prefer that the viscosity booster provides shear-thinning or pseudoplastic fluid behaviour, because the viscosity booster is than more easy to use. The viscosity booster may then be prepared as a solution in high concentration which, thanks to the lower viscosity at high shear, may readily be sprayed through a small opening, such as from a pressure can.

In an embodiment of the use in accordance with the present invention wherein the viscosity booster provides shear-thinning fluid behaviour to an aqueous liquid, the viscosity booster is a cross-linked homopolymer of (meth)acrylic acid and/or a copolymer of at least two monomers selected from acrylic acid, methacrylic acid, esters of acrylic acid or methacrylic acid, other acrylic comonomers and acrylamide.

Suitable cross-linked polymers in this family may be a product selected from the family of Carbopol® products offered by the company Lubrizol Active Materials (US), such as Carbopol® EZ-4, Carbopol® 941 or Carbopol® 934, or a product selected from the family of AQUASORB® products offered by the company SNF Floerger (FR), for instance their anionic polyacrylamide copolymer of acrylamide and potassium acrylate.

In an embodiment of the use in accordance with the present invention wherein the viscosity booster is a polymer with free acid groups, the acid groups in the polymer are at least partially neutralized with a base, preferably with sodium and/or potassium hydroxide. The applicants have found that the effect of the polymer as a viscosity booster are higher when the pH of the aqueous phase is relatively close to neutral, such as in the range of 4-10, preferably at least 4.0, more preferably at least 5, even more preferably at least 6, optionally at most 10.0, more preferably at most 9, even more preferably at most 8.

In an embodiment of the use in accordance with the present invention, the viscosity booster is able to further contribute adhesive power to an aqueous fluid. This feature brings the advantage that the aqueous phase comprising the viscosity booster adheres stronger to the insect larvae and/or pupae than water without the viscosity booster. This adherence further restrains their mobility because when moving they also need to move an amount of water phase with their body, and hence should have a higher effect on the insect lifecycle, and hence on the insect population surviving in the long run.

In an embodiment of the use in accordance to the present invention, the viscosity booster does not prevent the growth of bacteria or fungus associated with nutrients found in normal water systems. This brings the advantage that the viscosity booster has a low impact on, and preferably does not affect, the other aquatic life in the water phase which is treated with the viscosity booster in accordance with the present invention. It brings the further advantage, when some of the water comprising the viscosity booster may reach other surface waters where there is ecologically important aquatic life, that this habitat is not affected.

In an embodiment of the use in accordance to the present invention, the viscosity booster brings an effect of at most 100 mg/litre on the biological oxygen demand (BOD) of water comprising 0.1 %wt of the viscosity booster, preferably a BOD effect of at most 50 mg/litre, more preferably at most 10 mg/litre, preferably at most 8 mg/litre, more preferably at most 5 mg/litre, even more preferably at most 2 mg/litre, and most preferably a BOD effect of zero. This brings the advantage that the use in accordance of the present invention has little to no impact on the oxygen-needing part of the fauna and flora in the surface waters that may be affected by the use. It means that the use in accordance to the present invention has little to no effect on the risk for oxygen depletion in the aqueous habitats which it may affect. This brings the effect that the use in accordance with the present invention does not raise any significant ecotoxic concerns, and hence enjoys a higher level of acceptance with respect to possible ecotoxic effects.

The applicants have found that most of the synthetic polymers listed in this document, in particular those which are based at least partially on acrylic acid, methacrylic acid, or derivatives thereof, have a very low contribution to the biological oxygen demand (BOD) of a water volume in which they have been introduced. Actually, many of these polymers have zero effect on the BOD.

The applicants have further found that there are a variety of suitable forms for applying the present invention, and that the preferred form in which the viscosity booster is applied may depend on the specific circumstances.

In an embodiment of the use in accordance with the present invention, the viscosity booster is comprised in a solid form, preferably in a powdered application form, more preferably in a powdered self-wetting application form. The applicants have found that the solid form is very suitable for preventive use, i.e. a preventive dosing in temporarily dry places which could hold water after a rain shower of after watering ornamental plants. When coming in contact with water, the self-wetting viscosity booster is able to form a gel, or at least boost the viscosity of the stagnant water with which has come into contact.

The applicants have further found that the solid form is also very convenient for a repeat application, for maintaining or restoring the desired activity a period of time after a previous application.

In an embodiment of the use in accordance with the present invention, the viscosity booster is comprised in a dispersion. The applicants have found that the dispersion form is very convenient because, when poured into water, the viscosity booster readily disperses throughout the entire water volume, even into places which were not accessible for the user from his position when applying the dispersion. This makes a dispersion very handy when a stagnant water layer under a terrace floor needs to be treated. Another advantage of the dispersion form is that a dispersion may be dosed through small holes or slits, and hence may be suitable for treating stagnant water volumes which are difficult to access.

In an embodiment of the use in accordance with the present invention, the viscosity booster is comprised in a pre-mixed gel. The pre-mixed gel form brings a number of interesting advantages. The gel already holds an amount of water, so that the formulation may readily be prepared comprising other ingredients, such as a fragrance or a pigment. The gel form also holds solid particles in a stable suspension. The other ingredients may thus comprise solid particles, and yet the formulation may remain stable for very long periods. The pre-mixed gel form may also be made somewhat sticky. When dosed in dry places, the gel will stick to its environment, and hold together, such that it is unlikely to move or be blown away with a gush of moving air. The gel is also easier to be dosed in difficult to access places, like under a terrace floor or in a gulley.

In an embodiment, the pre-mixed gel may be made to hold air bubbles. In this embodiment, the gel may be made to float on the water surface, which may contribute to a better distribution of the viscosity booster into corners and covered parts of the stagnant water party of interest. The floating may also contribute to a more effective use of the viscosity booster, because the effect is primarily targeted at or close to the surface of the stagnant water party rather than in the depth thereof.

In an embodiment of the use in accordance with the present invention, the viscosity booster is applied by spraying, preferably from a pressure can. This brings the advantage that the use in accordance with the present invention is very convenient to the user. The viscosity booster may be sprayed from a large volume and under pressure by a professional user offering his services for residents or for local public authorities. The viscosity booster may also be sprayed from a pressure can which a consumer is able to purchase in a local shop and apply himself in the locations where he wants to impair the sustainability of a population of insects which lay their eggs in water.

In an embodiment of the use according to the present invention, the viscosity booster is dosed directly in the stagnant water or applied pre-emptive in places where liquid water is likely to arrive and possibly stagnate. The applicants have found that the desired effect of the present invention is not limited to a direct application of the viscosity booster to an already existing volume of stagnant water where insects may have laid eggs or in which insects may only later lay their eggs. The applicants have found that the viscosity booster may also be applied as a preventive measure in locations where there may not yet be a volume of water, but where a volume of water may form in the foreseeable future. The applicants have found that the effect of the viscosity booster in accordance with the present invention may still be achieved if the viscosity booster is applied a long time before a volume of water may build in the location where the viscosity booster has been applied. The viscosity booster may be selected to have a high permanence, as well as offering reversibility under a changing water household. Several suitable viscosity boosters, in particular the synthetic polymers derived from acrylic or methacrylic acid described elsewhere in this document are known to offer the advantage that the substance may be applied dry, or wet but subsequently dry out to become "dry", and subsequently, when again, or more, water is brought to the place of application, retain its effects, such as the boosting of the viscosity of the aqueous volume in which it is present.

In an embodiment of the use in accordance with the present invention the viscosity booster is accompanied by at least one further compound selected from a fragrance, preferably by a fragrance which is insect repellent or an insect attractant, a preservative, a bactericide, a fungicide, an antifreeze, a colourant, a pigment, a low density organic component, a pH buffering agent, and mixtures and combinations thereof. The applicants have found that the addition of a further compound to the viscosity booster in the use in accordance with the present invention may offer a variety of further advantages.

A fragrance may for instance be added. The fragrance may then be chosen to repel at least a portion of the target insects, such that at least a part of the female species of the target insects may elect to seek other water volume locations to lay their eggs. This opens the possibility that the female insect is not capable to timely find a suitable location for laying its eggs, e.g. before its life is ended by a predator or by any other cause of death. The addition of an insect repellent may therefore further increase the effect of the present invention on the sustainability of a population of the target insects.

The fragrance may also be chosen to attract the target insect species, in particular the female kinds thereof. This would bring the advantage that the target female species become attracted to laying their eggs in the water volumes that have been treated in accordance with the present invention. This additional fragrance may therefore further increase the effect of the present invention on the sustainability of a population of the target insects.

A colourant or pigment may also be added. This brings the advantage that the location where the present invention has been used becomes visually marked to the user. The user may thus avoid an unnecessary early retreatment of a location where the present invention has already been used, and at the same time the user may recognize suitable locations which he has missed treating at a prior passage when applying the present invention.

Another possible further compound is a low density organic component. Low density in this context means having a density lower than water. One purpose of such a component is to make the viscosity booster or the composition comprising the viscosity booster, e.g. in the form of a gel, to float on top of the water surface. Suitable low density organic components are for instance oils, possibly vegetable or animal oils but preferably mineral oils because of their higher permanence. The advantage of oils is their low volatility. The advantage of mineral oils is their chemical stability.

The incorporation of a pH buffering agent may bring the advantage that the formulation itself before application may be more stable and have a longer shelf life, but also that the effect of the viscosity booster in the stagnant water party may remain on target over a longer period of time, unaffected by acidifying factors such as acid rain, bacterial activity and the like.

In an embodiment of the use according to the present invention, the viscosity booster is a carbomer.

In the context of the present invention, a carbomer is defined as a water soluble polymer comprising as a monomer an unsaturated acid, or a derivative thereof such as an ester or amide, which may preferably be represented by the formula CH₂=CR-CO-G or CH₂=CR-COO-A¹. In this formula, R represents a substituent selected from the group of H, monovalent alkyl, aryl or alkylaryl radicals and monovalent cyclo alkyl radicals, although H as the substituent is preferred, with CH₃ a very acceptable second choice. Nevertheless, R may also be selected from the group of alkyl, alkoxy, haloalkyl, cyanoalkyl and similar groups containing 1 to 9 carbon atoms. G may represent an amine group -NL₂, such as -NH₂, in which case the monomer is preferably acrylamide or methacrylamide. A¹ and/or L may independently from R and G represent a substituent selected from the group of H, monovalent alkyl, aryl or alkylaryl radicals and monovalent cyclo alkyl radicals, although H as the substituent is preferred, in which case the monomer may be an unsaturated carboxylic acid. Nevertheless, A¹ and/or L may also be selected from the group of alkyl, alkoxy, haloalkyl, cyanoalkyl and similar groups containing 1 to 35 carbon atoms.

The carbomer preferably is primarily or entirely a homopolymer of (meth)acrylic acid or methacrylic acid, or a copolymer of mixtures thereof, and which may be cross-linked.

Optionally, other comonomers or copolymers may be used. Further to a monocarboxylic acid and/or its ester, use may also be made of a polycarboxylic acid and/or its ester as comonomer, such as an acrylate or methacrylate, and optionally an alkyl alkoxylated ester, such as an alkyl alkoxylated acrylate or methacrylate, which may be a C₁₅-C₃₅ alkyl alkoxylated acrylate or methacrylate. In particular, olefinically unsaturated carboxylic acids containing at least one carbon-carbon olefinic double bond, and at least one carboxyl group are preferred, and/or esters thereof. Suitable examples include acrylic acids, in particular acrylic acid, methacrylic acid, ethacrylic acid, alpha-cyano acrylic acid, beta-methylacrylic acid (crotonic acid), alpha-phenyl acrylic acid, beta-acryloxy propionic acid, cinnamic acid, p-chloro cinnamic acid, 1-carboxy-4-phenyl-1,3-butadiene, 3-acrylamido-3-methylbutanoic acid, itaconic acid, citraconic acid, mesaconic acid, glutaconic acid, aconitic acid, maleic acid, fumaric acid, and tricarboxy ethylene. Examples of suitable polycarboxylic acids include acid anhydrides, such as maleic anhydride, wherein the anhydride group is formed by the elimination of one molecule of water from two carboxyl groups located on the same carboxylic acid molecule. However, acrylic and methacrylic acid are preferred.

The alkyl alkoxylated acrylate or methacrylate is a hydrophobic co-monomer. The hydrophobic co-monomer will usually be an ester of an acid or a mixture of two or more thereof, and it may include one of the various known (meth)acrylates or (meth)acrylamides.

The alkyl group of the alkyl alkoxylated (meth)acrylate may contain 5-30 carbon atoms, preferably 15-30, more preferably 20-25 carbon atoms. The alkyl structure may contain primary, secondary, or tertiary carbon configurations. Examples of suitable alkyl alkoxylated acrylates include methoxymethyl acrylate, methoxyethyl acrylate, ethoxyethyl acrylate, butoxyethyl acrylate, or ethoxypropyl acrylate. The alkyl structure may also contain a phenyl group, which may be substituted, and suitable alkyl structures are octylphenyl, nonylphenyl and dodecylphenyl structures, of which the alkoxylated derivatives, such as those containing 1-12 ethoxy and/or propoxy groups are readily commercially available.

The monomers in the carbomer may be octadecyl acrylate, behenyl acrylate, dodecyl acrylate, hexadecyl acrylate and the like; and cyano derivatives thereof; methacrylates such as steryl methacrylate, methyl methacrylate, ethyl methacrylate, octyl methacrylate, isopropyl methacrylate, 2-ethylhexyl methacrylate, n-hexyl methacrylate, octadecyl methacrylate, behenyl methacrylate, dodecyl methacrylate, hexadecylmethacrylate, and the like. Mixtures of two or three or more long chain acrylic esters may successfully be polymerized with one of the carboxylic acid and/or ester monomers. The preferred hydrophobic monomers are the linear, long chain hydrophobic monomers wherein the alkyl group contains at least 12 carbon atoms, such as stearyl methacrylate, hexadecyl methacrylate, and behenyl methacrylate. Optionally, a complex hydrophobe may be utilized containing polyalkyleneoxide branches capped with hydrophobic alkyl or alkylaryl groups.

For a (meth)acrylic acid ester of an alkoxylated alcohol the alkyl group is typically a C₈-C₂₄ alkyl; alkylaryl, including alkylphenyl groups such as octylphenyl and nonylphenyl; or the residue of a polycyclic hydrocarbyl compound such as lanolin or cholesterol. Suitable alkyl groups include tridecyl, myristyl, pentadecyl, cetyl, palmityl, stearyl, eicosyl, and behenyl or docosyl or mixtures thereof. Such a suitable monomer mixture may for instance originate from the alkoxylation of a mixture of lauryl, stearyl, cetyl, and palmityl alcohols.

The above-described carbomer (co)polymer is preferably cross-linked. As cross-linking agent, various polyunsaturated monomers may be utilized, whereby either a partially or substantially cross-linked three-dimensional network is obtained. Suitable cross-linking agents include allyl ethers of sucrose or pentaerythritol, or other polyunsaturated monomers for example diallyl esters, dimethallyl ethers, allyl or methallyl acrylates and acrylamides, tetraallyl tin, tetravinyl silane, polyalkenyl methanes, diacrylates and dimethacrylates, divinyl compounds such as divinyl benzene, divinyl glycol, polyallyl phosphate, diallyloxy compounds, phosphite esters, and the like. Typical polyunsaturated monomers include di, tri, or tetra, penta, or hexa-allyl sucrose; di, tri, or tetra-allyl pentaerythritol; diallylphthalate, diallyl itaconate, diallyl fumarate, diallyl maleate, divinylbenzene, allyl methacrylate, allyl citrate, ethylene glycol di(meth)acrylate, trimethylolpropane triacrylate, 1,6-hexanediol diacrylate, pentaerythritol triacrylate, tetramethylene diethacrylate, tetramethylene diacrylate, ethylene diacrylate, ethylene dimethacrylate, triethylene glycol methacrylate, methylene bisacrylamide, and the like. Castor oils or polyols, esterified with ethylenically unsaturated carboxylic acid and the like may also be used. Preferred crosslinking agents include allyl pentaerythritol, allyl sucrose, trimethylolpropane allyl ether, and divinyl glycol.

A preferred carbomer according to the present invention may be a polymer having the formula (I)

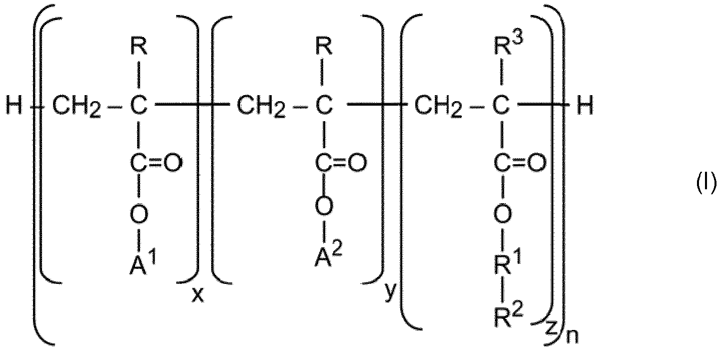

In another embodiment the carbomer according to the present invention is a polymer having the formula (II).

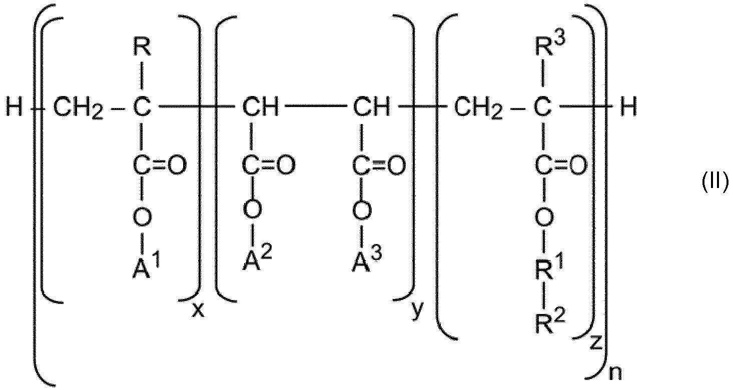

In formulae (I) and (II), z may be 0 or 1; if z is 1, (x + y) : z may be from 4 : 1 to 1,000 : 1, preferably from 6 : 1 to 250 : 1; in which the monomer units may be in random order, y preferably being from 0 up to a maximum equal to the value of x; n is at least 1; and further
R has the meaning specified herein before;
R¹ represents from 1 to 50 independently selected alkyleneoxy groups preferably ethylene oxide and/or propylene oxide groups;
R² represents a C4-C35 hydrocarbon group; preferably saturated alkyl but possibly containing a phenyl group, in which case we prefer R² to represent an octyl phenol, a nonyl phenyl or a dodecyl phenyl group;
R³ represents hydrogen or C1-C4 alkyl, preferably H or CH₃;
A¹, A² and A³ are independently selected from hydrogen and alkyl groups, preferably C1-C4 alkyl groups.

In the formulae (I) and (II), any of the groups -O-A1, -O-A2 or -O-A3 may also be replaced by an amine group, typically having the formula -NL₂, whereby L has the meaning as specified herein before.

For the production of the carbomer, any suitable polymerization technique may be employed. We prefer to use a free-radical polymerization technique such as those known in the art, e.g. such as being disclosed in Kirk-Othmer, 5th Edition, Wiley, in volume 20.

In an embodiment of the present invention, the carbomer has an average molecular weight Mn in the range of 20,000 to 5,000,000, preferably 35,000 to 3,000,000, more preferably 50,000 to 2,000,000, even more preferably 70,000 to 1,000,000, yet more preferably 80,000 to 500,000, even more preferably 90,000 to 200,000 and most preferably at most 130,000, as measured by GPC. The carbomer is preferably cross-linked. The molecular weight is preferably determined by Gel Permeation Chromatography (GPC) with the carbomer dissolved in dimethylacetamide (DMA) and on an analytical system which is calibrated with polymethylmethacrylate reference standards. More preferably the carbomer analysed as such also has, always relative to DMA, an Mw in the range of 50,000 to 5,000,000, preferably 100,000 to 3,000,000, more preferably 130,000 to 2,000,000, and even more preferably 150,000 to 200,000. The polydispersity of the copolymer is preferably in the range of 1-5, more preferably from 1.1 to 4.0, even more preferably from 1.2 to 3.0, yet more preferably from 1.3 to 2.0, even more preferably from 1.4 to 1.7 and even more preferably at most 1.7, determined by the same method.

The above described effects are particularly pronounced with a carbomer additive which comprises an acrylic acid homopolymer, in particular an α,β unsaturated monobasic acrylic acid having 3-5 carbon atoms, which corresponds to the formula III:

CH₂=CR-COOH formula III

in which R represents a substituent selected from the group of H, monovalent alkyl, aryl or alkylaryl residues and monovalent cycloalkyl residues, though H as the substituent has the preference. Nevertheless, R may also be selected from the group of alkyl, preferably methyl, alkoxy, haloalkyl, cyanoalkyl and similar groups having 1 to 9 carbon atoms.

Homopolymers of acrylic acid and methacrylic acid have the preference, because they are readily commercially obtainable at an economically acceptable price and because they cause the desired change of viscosity.

A preferred viscosity ratio between a first situation whereby no pressure or shear forces are applied to the composition according to the present invention and a second situation whereby the composition is subjected to pressure or shear forces, is obtained with an additive wherein the homopolymers are cross-linked with a cross-linking agent which is a polyfunctional monomer having at least two terminal vinyl CH₂=C groups, and with a molecular weight as indicated above, or also between 0.05-100, preferably between 0.5-10, more preferably between 1-5 x 10 exp 9 Dalton, the additive having the property that at high shear forces the viscosity reduces, and the viscosity increasing immediately when the shear forces are removed.

Preferably use is made of a cross-linking agent which is a polyalkenyl polyether, in particular allyl pentaerithritol. Other suitable cross-linking agents are polyfunctional monomers having at least two terminal vinyl CH₂=C groups, such as for instance in butadiene, isoprene, divinyl benzene, divinyl naphthalene, allyl acrylates, and the like. Preferred cross-linking agents are those which contain an alkenyl group wherein an olefinic double bound is connected to a terminal methylene group. Cross linking agents which are particularly preferred are polyethers having on average two or more alkenyl ether groups per molecule. Other suitable cross-linking agents comprise dially esters, dimethylallyl ethers, allyl or methallyl acrylates, acrylamides. Examples thereof are allyl pentaerythritol, allyl saccharose, trimethylolpropane triacrylate, 1,6-hexanediol diacrylate, trimethylolpropane propane diallylether, pentaerythritol triacrylate and the like.

The above cited effects were also observed with an additive which comprises a copolymer, whereby the acrylic acid of the formula III is copolymerized with at least one alkylacrylate having formulate IV:

CH₂=CR'-CO-OR" formula IV

whereby R' is selected from the group consisting of H, methyl, ethyl and R" is a C10-C30 alkyl group, preferably a C10-C20 group, the copolymers preferably being cross-linked with a cross-linking agent which is a polyfunctional monomer having at least two terminal vinyl CH₂=C groups, as described above.

Representative acrylates of formula IV are methyl acrylate, ethyl acrylate, propyl acrylate, butyl acrylate, methyl methacrylate, methyl ethacrylate, octyl acrylate, lauryl acrylate, stearyl acrylate, behenyl acrylate, and the corresponding methacrylates. Suitable copolymers comprise copolymers of a mixture of two or more of the listed compounds with acrylic acid of formula III. Other comonomers comprise acrylonitriles, olefinic unsaturated nitriles, preferably those having 3-10 carbon atoms, for example acrylonitrile and methacrylonitrile; mono-olefinically unsaturated acrylamides, such as acrylamide en methacrylamide, N-alkylolamides of α,β-olefinically unsaturated carboxylica acids, including those having 4-10 carbon atoms, preferably N-methylol-methacrylamide.

Suitable commercially available products for use as the carbomer in the context of the present invention are available from Sigma Chemical Company, such as the products which are offered under the tradename Polygel ®, e.g. Polygel ® CB 3V, from Rohm & Haas, e.g. the products offered under the tradename Acusol®, from Noveon or Lubrizol, for example products offered under de trademarks Pemulen™ and/or Carbopol ®, such as Carbopol 674 or 981, Carbopol ETD 2050, or Novethix ® L-10, from Wako Pure Chemical Industries in Japan, or from Allied Colloids from Great-Britain, such as Salcare®, or the products offered under the trademark Flosperse™ by SNF Floerger. The carbomer may be obtained as a solid powder, such as Carbopol 674 or Polygel CB-3V, but may also be obtained as liquid dispersions, such as Polygel W400 or W301 Polygel or Polygel DR. The liquid forms are easier to process, because they do not require high shear mixing, which is strongly preferred for the dissolving of a powder carbomer. Novethix L-10 is discussed in great detail in WO 2010/103050.

In an embodiment of the present invention, the carbomer comprises a homopolymer of an α,β unsaturated monobasic acrylic acid having 3-5 carbon atoms, which corresponds to the formula III:

CH₂=CR-COOH formula III

in which R represents a substituent selected from the group of H, monovalent alkyl, aryl or alkylaryl residues and monovalent cycloalkyl residues, alkoxy, haloalkyl, cyanoalkyl having 1 to 9 carbon atoms, the homopolymers preferably being cross-linked with a cross-linking agent which preferably is a monomer having at least two terminal vinyl CH₂=C groups..

In another embodiment of the present invention the carbomer comprises a copolymer of
(i) an α,β-unsaturated monobasic acrylic acid, which corresponds to the formula III with 3-5 carbon atoms:

   CH₂=CR-COOH formula III

   whereby R is a substituent selected from the Group of H, monovalent alkyl, aryl, alkylaryl resten, monovalente cyclo-alkyl residues, alkoxy, haloalkyl, cyanoalkyl having 1 to 9 carbon atoms,
   with
(ii) at least one alkyl acrylate represented by formula IV

   CH₂=CR'-CO-OR" formula IV

   whereby R' is selected from the group of H, methyl, ethyl and whereby R" is a C10-C30 alkyl group,
   the copolymers preferably being cross-linked with a cross linking agent which preferably is a polyfunctional monomer having at least two terminal vinyl CH₂=C groups.

In this embodiment, R"in formula IV is preferably a C10-C20 alkyl group.

In another embodiment of the present invention, the carbomer has an average molecular weight Mn in the range of 20,000 to 5,000,000, as measured by Gel Permeation Chromatography (GPC).

By preference, the carbomer according to the present invention is itself cross-linked, and preferably the cross linking agent of the carbomer is allylpentaerythritol.

In yet another embodiment, the carbomer in the composition according to the present invention is itself a pseudo-plastic material.

When dosing the carbomer into the composition for use according to the present invention, preferably sufficient carbomer is added in order to clearly observe the properties of a dilatant fluid, or of a non-Newtonian composition.

In another embodiment, there may be selected for an additional viscosity booster which is selected from the group consisting of carboxymethyl cellulose (CMC), cellulose gum, and xanthan gum.

Preferably the carbomer is present in the water volume at a concentration of at least 5 ppm by weight based on the total solution and optionally not more than 2.5% by weight, preferably not more than 2.0% by weight, more preferably not more than 1.5% by weight and even more preferably not more than 1.0% by weight on the same basis. More preferably the carbomer is present in at least 50 ppm by weight, more preferably at least 500 ppm by weight, even more preferably at least 750 ppm by weight, yet more preferably at least 900 ppm by weight, more preferably at least 0.1 % by weight, preferably at least 0.2% by weight, more preferably at least 0.5% weight, even more preferably at least 1.0% wt, preferably at least 2.0% by weight, and optionally at most 6.0% by weight, preferably not more than 5.0 % by weight, more preferably at most 4.0% by weight, whereby the concentration is expressed relative to the total weight of the solution.

The presence of the carbomer in the composition for use according to the present invention may be determined by Infra-Red (IR) Spectrometry, and with the development of a suitable calibration curve, this method may be made suitable for a quantitative determination of the amount of carbomer present in the composition. We prefer to use a Perkin Elmer FT-IR Spectrometer Spectrum 100, with a Universal ATR Sampling Accessory.

### EXAMPLES

By way of exemplifying the present invention, the applicants have prepared solutions of the following synthetic polymers in water and neutralised the solution with NaOH to a pH of 6.3. The viscosity was measured at 25°C using a Brookfield RVT apparatus:

| **Polymer** | **Concentration (wt%)** | **Viscosity (cP or mPa.s)** |
|---|---|---|
| Carbopol 941 | 0.15% | 2900 |
| Carbopol 934 | 0.25% | 6350 |
| Carbopol EZ-4 | 0.10% | 10000 |
| Carbopol EZ-4 | 1.0% | 55000 |

Carbopol® 941 and 934 are cross-linked polymers of acrylic acid. Carbopol EZ-4 is a self-wetting polymer powder. All these products were obtained from Lubrizol Active Materials (US).

These examples show that even very low concentrations of a viscosity booster are able to boost the viscosity of water at low shear to appropriately effective levels. For comparison, a shampoo typically has a viscosity of about 3000 mPa.s, and honey of about 1000 mPa.s. It is readily inferred from these examples that concentrations of even much below 0.15%wt of Carbopol 941 would be effective in impeding the mobility of mosquito larvae in an stagnant water party.

Having now fully described this invention, it will be appreciated by those skilled in the art that the invention can be performed within a wide range of parameters within what is claimed, without departing from the scope of the invention, as defined by the claims.

## Claims

1. Use of a viscosity booster for the control or local eradication of insects which lay their eggs in water, in particular for the control of populations of insects which lay their eggs in stagnant waters.

2. The use according to claim 1 for increasing the viscosity of open stagnant liquid water parties that exist or may form as a result of irrigation and/or of atmospheric precipitation, preferably sufficiently to impede the mobility of insect larvae and/or insect pupae in stagnant water.

3. The use according to claim 1 or 2 for the control of insects in residential areas and/or in animal breeding or animal keeping areas.

4. The use according to any one of the preceding claims for the control of members of the family of Culicidae, in particular for the control of mosquitoes, more particularly of the mosquitoes species comprising blood-eating or bloodsucking females.

5. The use according to any one of the preceding claims for the control of insects which are potential vectors for diseases, in particular for disease-causing viruses, parasites or bacteria.

6. The use according to any one of the preceding claims for the prevention of the spread of diseases, in particular for mosquito-borne diseases.

7. The use according to any one of the preceding claims for the control of diseases selected from the list consisting of malaria, yellow fever, dengue fever, chikungunya, filariasis, in particular lymphatic filariasis, elephantiasis, and tuleramia, and/or for the control of the spread of disease-causing viruses, in particular of a virus selected from the list consisting of the yellow fever virus, the dengue fever virus, the chikungunya virus, the arbovirus, the West Nile virus, the Eastern equine encephalitis virus, the Japanese encephalitis virus, and the Zika virus.

8. The use according to any one of the preceding claims wherein the viscosity booster is a thickening agent.

9. The use according to any one of the preceding claims wherein the viscosity booster provides non-Newtonian fluid behaviour to an aqueous fluid.

10. The use according to the preceding claim wherein the viscosity booster is selected from the list consisting of fumed silica, precipitated silica, talc, chalk, a cross-linked polymer of (meth)acrylic acid and/or a copolymer of at least two monomers selected from acrylic acid, methacrylic acid, esters of acrylic acid or methacrylic acid and acrylamide.

11. The use according to any one of the preceding claims wherein the viscosity booster is comprised in a solid form, preferably in a powdered application form, more preferably in a powdered self-wetting application form.

12. The use according to any one of claims 1-10 wherein the viscosity booster is comprised in a dispersion.

13. The use according to any one of claims 1-10 wherein the viscosity booster is comprised in a pre-mixed gel.

14. The use according to any one of the preceding claims wherein the viscosity booster is applied into the stagnant water in a concentration of at least 5 ppm by weight and at most 2.5%wt.

15. The use according to any one of the preceding claims wherein the viscosity booster is accompanied by at least one further compound selected from a fragrance, preferably by a fragrance which is insect repellent or an insect attractant, a preservative, a bactericide, a fungicide, an antifreeze, a colourant, a pigment, a low density organic component, a pH buffering agent, and mixtures and combinations thereof.
